# EUROPEAN PATENT APPLICATION

(11) **EP 4 645 603 A1**
(43) Date of publication of application: **05.11.2025**
(21) Application number: 25173213.7
(22) Date of filing: 29.04.2025
(51) Int. Cl.: H01R 11/26, H01M 50/50, H02G 5/00, H01R 11/01

(54) **ELECTRICALLY CONDUCTIVE CONTACT ASSEMBLY, MODULE CONNECTOR, CONNECTION ASSEMBLY AND METHOD FOR MECHANICAL FASTENING**

(30) Priority: 03.05.2024 DE 102024112514
(71) Applicant: TE Connectivity Solutions GmbH, 8200 Schaffhausen (CH)
(72) Inventor: EHEIM, Manuel, 8200 Schaffhausen (CH); STINE, Adrian, 8200 Schaffhausen (CH); HELDMANN, Frank, 8200 Schaffhausen (CH); WOLF, Marcus, 8200 Schaffhausen (CH); HOFFMANN, Bjoern, 8200 Schaffhausen (CH); DISTLER, Patrick, 8200 Schaffhausen (CH); BUCHHOLZ, Ron, 8200 Schaffhausen (CH); SCHAEFER, Maik, 8200 Schaffhausen (CH)
(74) Representative: Grünecker Patent- und Rechtsanwälte PartG mbB

(57) **Abstract**

The present invention relates to an electrically conductive contact assembly (100, 100', 100"), wherein the contact assembly (100, 100', 100") comprises a contact element (106), a busbar (102) and a fastening element (110, 110', 110") for mechanically fastening the contact element (106) to the busbar (102). The contact element (106) is configured to be affixed to the busbar (102) in a frictionally engaged manner at least on a first friction surface (120) in the receiving opening (104), and the fastening element (110, 110', 110") comprises a knurled section (138) which is longer in the axial direction (A) or of the same length as the receiving opening (104) of the busbar (102). The knurled section (138) is configured such that the knurled section (138) in the assembled state of the contact assembly (100, 100', 100") exerts a contact force (FK) upon the contact element (106) which presses the first friction surface (120) of the contact element (106) flatly against the inner side of the receiving opening (104) of the busbar (102). Furthermore, the present invention relates to a method for mechanically fastening a contact element (106) to a busbar (102).

## Description

The present invention relates to an electrically conductive contact assembly for a module connection, e.g. of a battery module, for example but not exclusively, for applications in the automotive and energy technology sectors. The present invention furthermore relates to a module connector, a connection assembly and a method for mechanically fastening a contact element to a busbar.

To transmit electrical currents in the order of several hundred amperes between electrical modules, such as battery modules and electric motors or other electrical consumption units, busbars made of copper, aluminum, or alloys containing copper and/or aluminum are often used in automotive and energy technology. In order to be able to connect the electrical modules to one another, the busbars are often provided with contact sections which protrude from the remainder of the busbar, provide a defined contact surface and are pressed against each other using fastening elements. The protruding contact sections there represent a discontinuity in the shape of the respective busbar, which often leads to challenges during production.

If the busbar is manufactured integrally with the contact section, e.g. by forging or extrusion processes, the remainder of the busbar often cannot be configured completely freely, but is subject to design restrictions, since the entire busbar would otherwise not be able to be manufactured or could only be manufactured with great effort. In other words, busbars manufactured in one piece are limited in their geometry and therefore cannot have complex profiles. However, busbars with complex profiles are required, in particular in modern battery applications in the field of electromobility, especially since battery modules and electric motors are increasingly distributed in decentral manner in the vehicle in order to save installation space.

If the contact sections are instead welded to the busbar as previously separate components during production, restrictions also arise, since the aspect of weldability must take precedence over other properties of the materials and the design. Under certain circumstances, particularly weight-saving materials or material combinations cannot be used due to a lack of weldability.

The present invention is therefore based on the object of providing module connections that can be configured more freely in terms of geometry and choice of material and are therefore easier to manufacture.

This object is satisfied by the object of the independent claims. Advantageous embodiments are the object of the dependent claims.

According to a first aspect, an electrically conductive contact assembly is provided, where the contact assembly comprises a contact element, a busbar, and a fastening element for mechanically fastening the contact element to the busbar. The busbar there comprises a receiving opening for receiving at least part of the contact element, and the contact element comprises a passage opening for inserting the fastening element, a contact section extending in a tubular manner along the passage opening with a cylindrical contact surface pointing radially outwardly, where the contact element is configured to be affixed in a frictionally engaged manner to the busbar at least at a first friction surface in the receiving opening. The fastening element comprises a knurled section which is longer in the axial direction or of the same length as the receiving opening of the busbar, where the knurled section is configured such that the knurled section in the assembled state exerts a contact force upon the contact element which presses the first friction surface of the contact element flatly against the inner side of the receiving opening of the busbar.

The present disclosure is there based in particular on the inventive idea of designing a fastening element such that it is configured with a knurled section whose height measured in the axial direction is equal to or greater than a thickness of the busbar and which is shaped such that it exerts a force upon the collar section of the contact element, which ensures that the first friction surface of the collar section is pressed flatly against an inner surface of the receiving opening of the busbar. When the contact assembly is fastened, the material of the contact section is moved in relation to an axis of symmetry of the receiving opening both in the axial direction as well as in the radial direction towards an inner surface of the receiving opening of the busbar. This makes it possible to increase the contact area between the contact element and the busbar, which facilitates non-welding contacting also of thin busbars with thicknesses in the range below 6 mm. In particular, the present contact assembly facilitates the non-welding connection of a plurality of pieces of thin stacked sheet metal, which are also referred to below as "thin sheet metal", "layered sheet metal (conductors)", "laminated conductors", "thin-layer sheet metal" or "thin sheet metal conductors". This includes in particular pieces of thin sheet metal that can have thicknesses in the range of 0.03 mm to 0.5 mm. In such applications, the non-welding connection is particularly advantageous in order to achieve less energy-consuming and cleaner contact and fastening of the pieces of thin sheet metal. In addition, the non-welding connection of the pieces of thin sheet metal can avoid contamination that can arise during the welding process.

In summary, this means that the geometric configuration of the contact assembly makes it in particular easier to reliably electrically contact thin busbars or busbars that consist of many individual layered pieces of thin sheet metal by pressing instead of welding.

According to a second aspect, the contact force that the knurled section exerts upon the contact element has a radial component and an axial component with respect to an axis of symmetry of the passage opening. In this way, it can be prevented that the knurled region only displaces the material of the contact ring in the axial direction when mechanically fastening the contact assembly in the region of the first friction surface, which results in a reduction in the contact area between the contact ring and the busbar. This achieves reliable mechanical and electrical contact between the contact element and the busbar, even if the busbar is thin or consists of a plurality of pieces of thin sheet metal.

According to a third aspect, the fastening element comprises a cylindrical fastening section, which is insertable into the passage opening of the contact element, and at least part of the knurled section surrounds the cylindrical fastening section in a frustoconical manner. The frustoconical configuration of the knurled section supports the plastic deformation of the contact element, which presses material of the contact element in the direction towards the contact surface between the contact element and the busbar in order to increase the contact area and contact pressures.

In order to increase the material movement of the contact element in the direction of the first friction surface, the outer surface of the knurled section tapers in the axial direction according to a fourth aspect.

According to a fifth aspect, the fastening element has a bearing section that extends radially outwardly and has a bearing surface for the busbar. For example, the bearing section can protrude circumferentially in a plate-shaped manner from the remainder of the fastening device. The bearing section can be formed, for example, by an annular widening of the fastening device configured as a threaded sleeve. In the assembled state of the contact assembly, the bearing section of the fastening device and the contact section of the contact element are opposite one another with respect to the busbar in order not to restrict the accessibility of the contact surface of the contact section.

According to a sixth aspect, the bearing surface for the busbar forms at least part of the knurled section. By knurling the bearing surface, the creation of a torque between the fastening element and the contact element can be suppressed, so that twisting of the fastening element in relation to the contact element can be prevented. In other words, by knurling the bearing surface, the loosening torque for the fastening element in relation to the contact element (and therefore also in relation to the busbar with which the contact element is connected in a positive-fit manner) is increased. When the contact assembly is fastened, this helps the knurled surface to exert a force which acts in the axial direction and the radial direction in relation to the axis of symmetry of the receiving opening.

According to a seventh aspect, the knurled section comprises a plurality of triangular and/or rectangular toothing elements which run parallel to one another at least in the axial direction. In this way, a knurled surface that is particularly simple to manufacture and practical to design can be obtained. The toothing elements can take the shape in particular of ribs that protrude radially, run axially, and are distributed in the circumferential direction across the knurled section. The ribs can have, for example, a plurality of bevels and/or tooth flanks that run parallel to one another in axial direction A.

According to an eighth aspect, the busbar comprises a plurality of thin sheet metal conductors that are disposed on top of one another in the axial direction, where a layer thickness of each of the plurality of thin sheet metal conductors is preferably less than 0.5 mm. In this way, the flexibility of the busbar can be increased, while the special configuration of the fastening element can ensure that electrical contact resistance between the contact element and the plurality of thin sheet metal conductors is of sufficiently low resistance (in particular in the range of a few µΩ). The thin sheet metal conductors of the busbar can be both non-welded as well as welded.

Alternatively or in addition to the eighth aspect, the receiving opening of the busbar can have a thickness in the axial direction of less than or equal to 6 mm. In this way, a particularly space-saving busbar can be provided, while the special configuration of the fastening element can ensure that electrical contact resistance between the contact element and the plurality of thin sheet metal conductors is of sufficiently low resistance (in particular in the range of a few µΩ).

According to a ninth aspect, at least part of the first friction surface of the contact element is knurled. The knurling of the first friction surface can support the transport of material in the contact element as well as break up an oxide layer that forms on the inner surface of the receiving opening, in particular if the busbar is made of aluminum or a plurality of thin aluminum sheet metal conductors.

According to a tenth aspect, the fastening element is configured as a threaded sleeve with an internal thread for being screwed to a screw-shaped holding element. In this way, the fastening device can be detachably screwed into the contact assembly so that good accessibility of the fastening device can be made possible in the event of maintenance or repair.

According to an eleventh aspect, the fastening element is configured as a non-threaded collar sleeve for receiving a screw-shaped holding element. In this way, the fastening device can also be screwed detachably into the contact assembly, so that good accessibility of the fastening device can also be made possible in the event of maintenance or repair.

According to a twelfth aspect, a module connector is provided with at least one contact assembly according to one of the above aspects and with a touch guard housing, where the touch guard housing is configured to receive the at least one contact assembly. The module connector provided benefits from the aforementioned advantages of the contact assembly. Furthermore, the module connector provided is characterized by increased electrical safety. This greatly expands the possible fields of application. The touch guard housing is preferably made of electrically insulating material. Optionally, the touch guard housing can comprise at least one touch guard cap that is arranged on the fastening device.

According to a thirteenth aspect, a connection assembly is provided with two or more contact assemblies, each of which is configured to complement one another. The connection assembly provided as well benefits from the advantages mentioned above. In addition, the connection assembly provided can be used directly to establish the module connection. For this purpose, the contact elements of the two contact assemblies are affixed in a frictionally engaged manner to the respective busbar, pressed against one another with their contact surfaces, and fastened with the aid of a holding element.

According to a fourteenth aspect, a method for mechanically fastening a contact element to a busbar is provided. The method comprises the following steps of: (i) inserting the contact element into a receiving opening of the busbar, where the contact element is affixed in a frictionally engaged manner to the busbar at least at a first friction surface in the receiving opening, and where the contact element comprises a contact section extending in a tubular manner along a passage opening of the contact element and having a cylindrical contact surface pointing radially outwardly; (ii) inserting the fastening element into the passage opening of the contact element, where the fastening element comprises a knurled section which is longer in the axial direction or of the same length as the receiving opening of the busbar; and (iii) fastening the fastening element in the passage opening of the contact element by way of a screw-shaped holding element, where the knurled section exerts a contact force upon the contact element which presses the first friction surface of the contact element flatly against the inner side of the receiving opening of the busbar. The method provided also benefits from the above-mentioned advantages and in particular allows for a non-welding and thus energy-saving and clean contact of thin busbars with thin sheet metal conductors.

According to a fifteenth aspect, the busbar comprises a plurality of non-welded thin sheet metal conductors which are disposed on top of one another in the axial direction. This has the advantage that the flexibility of the busbar can be increased, while at the same time the above fastening method ensures that there is low-ohmic contact resistance present between the busbar and the contact ring. Alternatively, the busbar can also have a single piece of thin sheet metal having a thickness in the axial direction of less than 6 mm.

The invention shall be explained hereafter in more detail with reference to the drawings on the basis of several exemplary embodiments, the different features of which may be combined with one another as required in accordance with the above observations. In particular, individual features can be added to the embodiments described in accordance with the above explanations if the effect of these features is necessary for a specific case of application. Conversely, individual features can be omitted from the existing embodiments if the technical effect of these features is not important in a specific case of application. Similar, identical, and functionally identical elements in the drawings are provided with the same reference numerals to the extent as appropriate, where:
- **Fig. 1**: shows a schematic perspective view of a busbar with two exemplary contact assemblies;
- **Fig. 2**: shows a schematic perspective view of the rear side of the busbar from Figure 1;
- **Fig. 3**: shows a schematic cross-sectional view of the exemplary busbar along the section line III-III drawn in Figures 1 and 2;
- **Fig. 4**: shows a schematic exploded view of a first exemplary contact assembly;
- **Fig. 5**: shows a schematic exploded view of a second exemplary contact assembly which is configured to be complementary to the first exemplary contact assembly;
- **Fig. 6**: shows a schematic cross-sectional view of the second exemplary contact assembly without a holding element;
- **Fig. 7**: shows a schematic side view of a first exemplary fastening element;
- **Fig. 8**: shows a schematic side view of a second exemplary fastening element;
- **Fig. 9**: shows a schematic side view of a third exemplary fastening element.

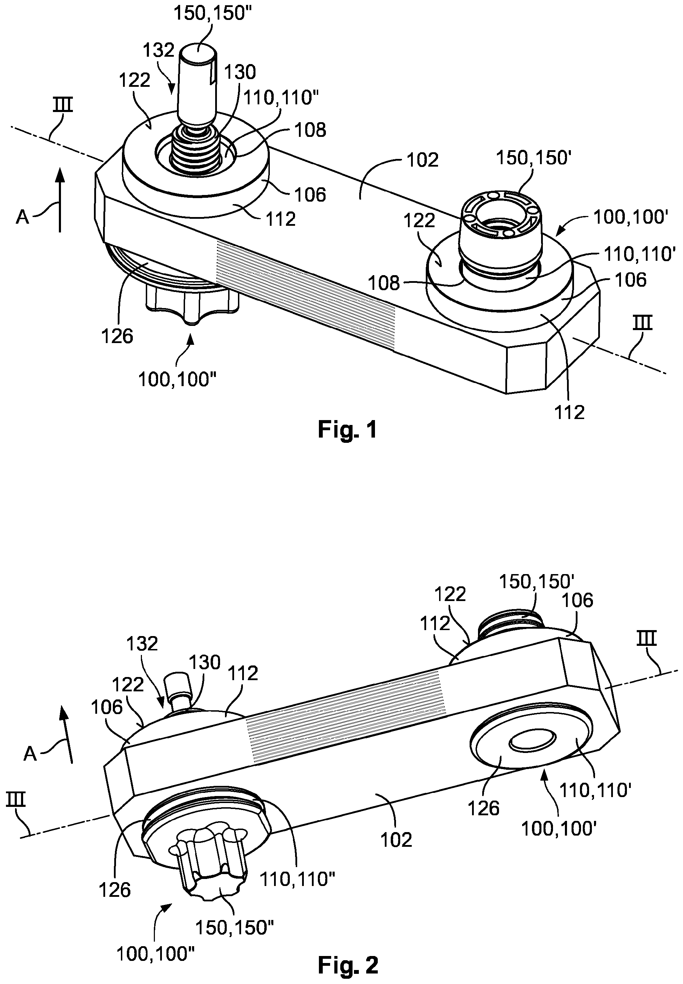

The present invention shall be explained in more detail hereafter with reference to the figures, and in particular first with reference to Figures 1 to 5. It is to be noted that the size ratios in all of the figures and in particular the layer thickness ratios are not necessarily shown true to scale. Furthermore, parts that are not necessary or impedimental for understanding are not shown, in particular electrically insulating housing elements and protective covers.

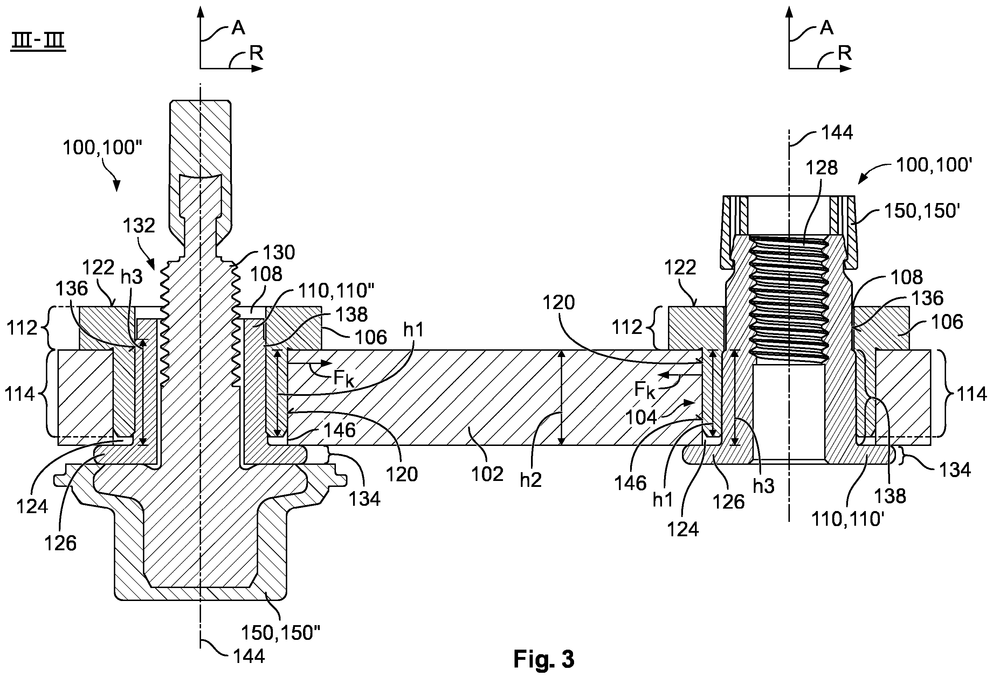

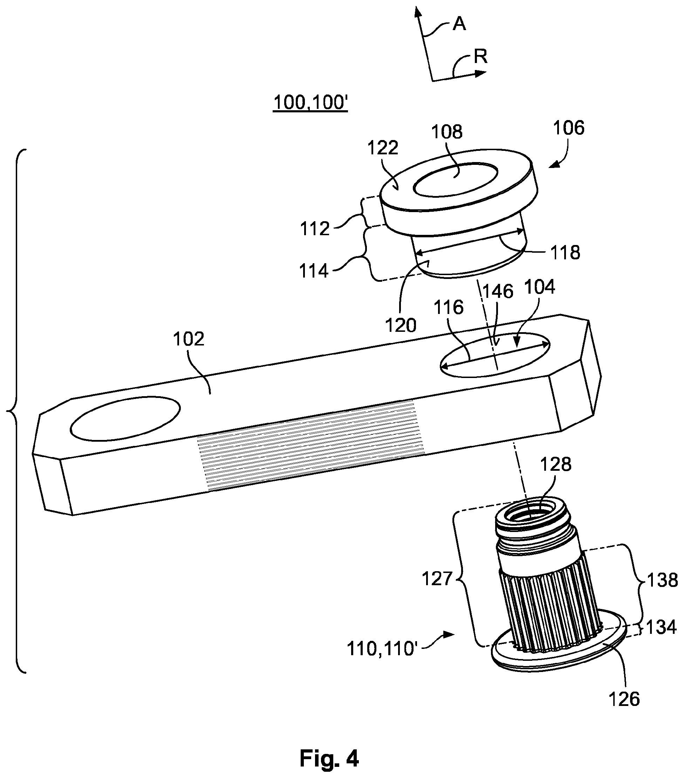

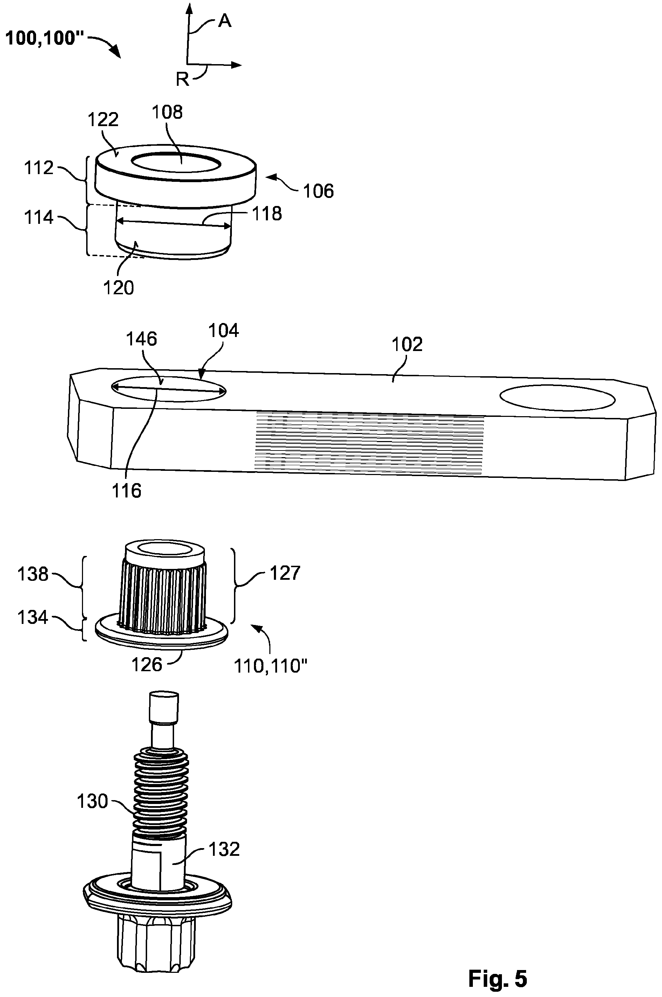

Figures 1 and 2 each show schematic perspective views of an exemplary busbar 102 with two exemplary contact assemblies 100' and 100" in the assembled state. Figure 3 shows a schematic cross-sectional view of exemplary busbar 102 along section line III-III drawn in Figures 1 and 2. Busbar 102 can be a busbar (also referred to as "electrical busbar") that extends between at least two electrical modules. Alternatively, it can also be a busbar segment that is part of an electrical module. In the example shown, busbar 102 comprises, for example in a first end region, a first receiving opening 104 which is part of a first exemplary contact assembly 100' (see also the schematic exploded drawing of Figure 4). Furthermore, busbar 102 comprises, for example in a second end region, a second receiving opening 104 which is part of a second exemplary contact assembly 100" (see also the schematic exploded drawing of Figure 5). First exemplary contact assembly 100' is configured to be complementary to second contact assembly 100" so that contact assembly 100' and contact assembly 100" together can give rise to a connection assembly in which two different busbars 102 are electrically connected to one another.

For this purpose, the complementary contact assemblies 100' and 100" each have a contact element 106 (also referred to as a "contact ring"). Contact element 106 and busbar 102 can each be present as separate components (see Figure 4 and Figure 5) and, as shall be explained in more detail below, can be mated together in a frictionally engaged manner. Contact element 106 can thus be completely coated with a coating containing nickel and/or silver.

Contact element 106 comprises a passage opening 108 for inserting a fastening element 110' or a fastening element 110". A contact section 112 of contact element 106 extends in a tubular manner along passage opening 108. A collar section 114 of contact element 106 adjoins contact section 112 and extends passage opening 108 in a sleeve-like manner. In each of two contact assemblies 100' and 100" of busbar 102, at least collar section 114 of fastening elements 110' and 110" is received in respective receiving opening 104 of busbar 102.

Receiving opening 104 can have a uniform inner diameter 116 throughout its depth, where an outer diameter 118 of collar section 114 is oversized with respect to this uniform inner diameter 116 (see Figure 4 and Figure 5).In particular, contact element 106 is configured to be affixable in a frictionally engaged manner to busbar 102 on a first friction surface 120 in receiving opening 104. First friction surface 120 is arranged on an outer surface of collar section 114. In Figures 1 to 3, contact element 106 is affixed with first friction surface 120 in a frictionally engaged manner to busbar 102 and is thus shown in a state mated to busbar 102. In the example shown, contact element 106 is configured as a cylindrical contact ring which is inserted with collar section 114 in a frictionally engaged manner into a receiving opening 104 of busbar 102. On a face side of contact section 112 facing away from collar section 114, contact element 106 comprises a contact surface 122 for a mating contact. Contact surface 122 of contact element 106 of contact assembly 100' is used in particular to electrically contact an associated contact surface 122 of a contact element 106 of a complementary contact assembly 100" which forms the mating contact (and vice versa). Contact elements 106 of complementary contact assemblies 100' and 100" touch each other at the face side and are pressed against each other by way of fastening elements 110', 110" (and a holding device).

In the examples shown, contact element 106 has a round cross-section in axial direction A with respect to passage opening 108. Alternatively, contact element 106 can also have a non-round cross-section (not shown), in particular an oval, elliptical, square, rectangular or polygonal cross-section, at least in sections, e.g. on collar section 114.

It can be seen in Figure 3 that collar section 114 is configured to be shorter in axial direction A than receiving opening 104 of busbar 102. This means that a height h1 of collar section 114 measured in axial direction A with respect to receiving opening 104 is lower than a height h2 of receiving opening 104 measured in axial direction A, which usually corresponds to a thickness of busbar 102 in the axial direction. To compensate for thermal expansion processes, an annular gap 124 between collar section 114 of contact element 106 and a bearing section 126 of fastening element 110 is present in the assembled state of contact assembly 100.

Alternatively, collar section 114 can also be configured to be of the same length in axial direction A as receiving opening 104 of busbar 102. This means that in the assembled state, collar section 114 is flush with busbar 102 and provides bearing section 126 of fastening element 110 together with busbar 102 with the largest possible bearing surface.

Fastening element 110' of contact assembly 100' and fastening element 110" of contact assembly 100" are each used to establish a reliable mechanical and electrical contact between contact element 106 and busbar 102. Fastening element 110', 110" is mated in a frictionally engaged manner to contact element 106. For this purpose, fastening element 110' or fastening element 110" each comprises a cylindrical fastening section 127 (see Figure 4 and Figure 5) which is inserted into passage opening 108 of contact element 106 in order to fasten contact element 106 to busbar 102 and to establish low-ohmic electrical contact resistance (in particular in the range of a few µΩ) between contact element 106 and busbar 102.

Fastening element 110' of contact assembly 100' in the examples shown is configured as a threaded sleeve with an internal thread 128. Internal thread 128 is disposed on a threaded section of fastening element 110' and is used for being screwed to a mating thread 130 of a screw-shaped holding element 132 (also "holding device", presently in the form of a screw), which is part of complementary contact assembly 100". Fastening element 110" of contact assembly 100" is configured as a non-threaded collar sleeve in the examples shown. This means in particular that an inner surface which is arranged within the volume of fastening element 110" has no thread so that fastening element 110" can accommodate screw-shaped holding element 132 without thread 130 of the screw-shaped holding element 132 engaging with fastening element 110". Screw-shaped holding element 132 can thus be passed through fastening element 110" in order to be screwed to internal thread 128 of fastening element 110' when two complementary contact assemblies 100' and 100" are assembled to form a connection assembly for electrically connecting two associated busbars 102 without welding.

In all examples shown, fastening element 110 comprises bearing section 126 extending radially outwardly which adjoins cylindrical fastening section 127 of fastening element 110. Bearing section 126 protrudes circumferentially in a plate-shaped manner from the remainder of fastening element 110. In particular, bearing section 126 is formed by an annular widening 134. In the assembled state of contact assembly 100, bearing section 126 is disposed opposite contact section 112 of contact element 106 with respect to busbar 102 (see Figure 3). Furthermore, bearing section 126 of fastening element 110' rests on the other side upon busbar 102 with respect to the threaded section when the threaded section of fastening element 110' is inserted into passage opening 108 of contact element 106 received in receiving opening 104 of busbar 102. Busbar 102 can then be clamped between contact section 112 of contact element 106 and bearing section 126 of fastening element 110.

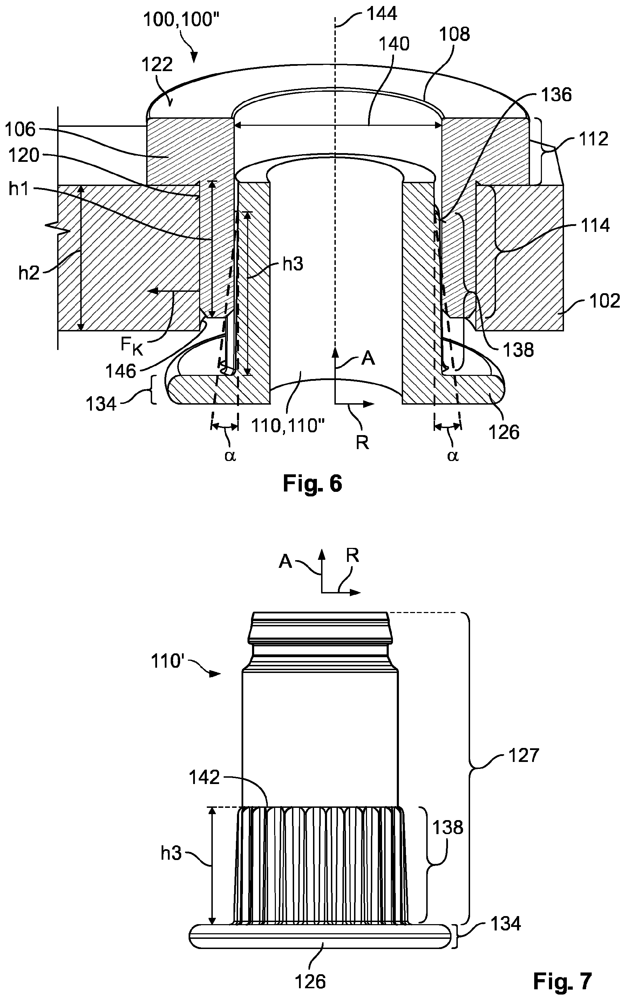

Contact element 106 of contact assemblies 100' and 100" is respectively configured to be affixable in a frictionally engaged manner to fastening element 110' (or to fastening element 110") at a second friction surface 136 in passage opening 108, i.e. on an inner surface of contact element 106. Figures 3 and 6 show contact element 106 in a state in which second friction surface 136 is affixed in a frictionally engaged manner to associated fastening element 110, where contact element 106 and associated fastening element 110 are affixed to one another in a rotationally fixed manner. In particular, it can be seen that first friction surface 120 and second friction surface 136 of contact element 106 are offset from one another in radial direction R with respect to an axis of symmetry 144 of passage opening 108.

The frictional connection between contact element 106 and fastening element 110 is enhanced by a knurled section 138 (also referred to as a "knurled region") provided on fastening element 110. This knurled section 138 is oversized with respect to inner diameter 140 of passage opening 108 of contact element 106. In the examples shown, knurled section 138 comprises ribs 142 that protrude radially, run axially, and are distributed in the circumferential direction over knurled section 138. Ribs 142 can comprise, for example, a plurality of bevels and/or tooth flanks that run parallel to one another in axial direction A. Ribs 142 can be formed in particular by triangular and/or rectangular toothing elements. Knurled section 138 can be produced by knurling a rotationally symmetrical section of fastening element 110, but is not limited to round cross-sections, but can also be produced in the case of non-circular cross-sections, in particular oval, elliptical, square, rectangular or polygonal cross-sections, by other forming processes (e.g. embossing), by machining processes (e.g. milling) and/or by primary forming processes (e.g. casting), in which a surface structure such as that obtained with knurling is achieved.

In particular, the oversize of knurled section 138 is selected such that collar section 114 of contact element 106 is plastically deformed by knurled section 138 after fastening element 110 has been inserted into passage opening 108. This deformation affects outer surface 120 (first friction surface 120) of collar section 114 and thereby also strengthens the frictional connection between contact element 106 and busbar 102.

In the case of thin busbars 102, i.e. when a height h2 of receiving opening 104 of busbar 102 is in the range of less than 6 mm, or in the case of busbars 102 which have a plurality of thin sheet metal conductors stacked on top of one another (in axial direction A), in particular non-welded, as schematically indicated in the figures, a height h3 of knurled region 138 measured in axial direction A is of the same length or longer than height h2 of the passage opening. Due to the small inner surface 146 of receiving opening 104 or of the passage openings of the individual thin sheet metal conductors of which receiving opening 104 is composed, it is important in these cases to maximize a contact surface between first friction surface 120 of contact element 106 and an inner surface 146 of receiving opening 104 in order to reduce the contact resistance between contact element 106 and busbar 102. After contact assembly 110', 110" has been mounted, knurled region 138 is configured for this purpose such that knurled section 138 exerts a contact force FK upon contact element 106 which presses first friction surface 120 flatly against inner surface 146 of receiving opening 104 of busbar 102. This makes it possible to avoid only punctiform contact between first friction surface 120 of contact element 106 and busbar 102, which would increase the contact resistance.

In particular, knurled section 138 is configured such that contact force FK that knurled section 138 exerts upon first friction surface 120 of contact element 106 has a force component that is directed in axial direction A and a force component that is directed in radial direction R. This makes it possible to prevent knurled section 138 from pressing material of contact element 106 only in the axial direction, i.e. away from inner surface 146 of receiving opening 104, when contact assembly 100', 100" is being fastened. Due to the special configuration of knurled section 138, material of contact element 106 is instead now also displaced in radial direction R and thus pressed against inner surface 146 of receiving opening 104.

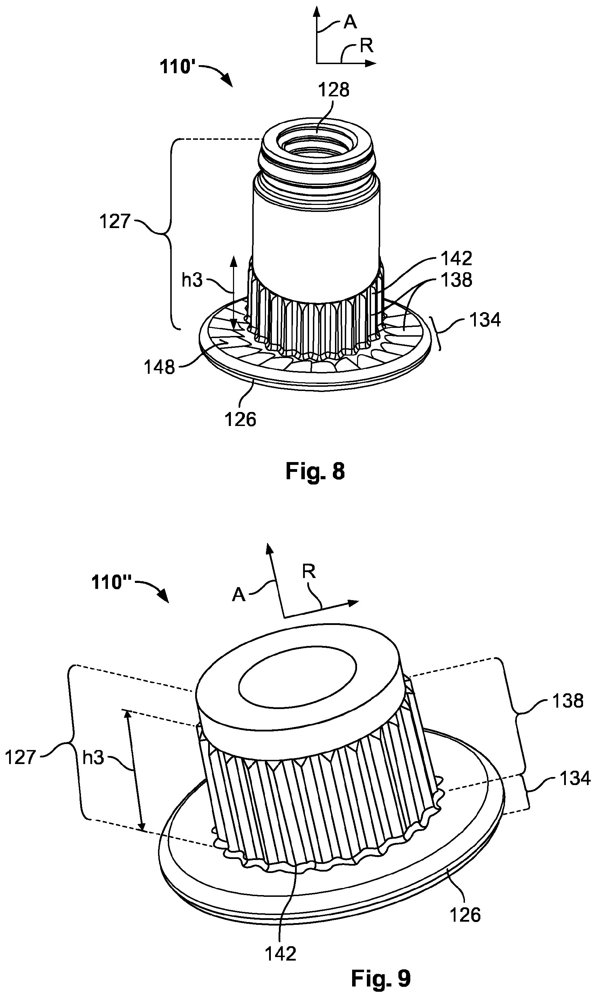

To illustrate the effect described above, Figure 6 shows a schematic cross section through exemplary contact assembly 100". Holding device 132 is not shown there. Furthermore, Figures 7 and 8 each show exemplary schematic configurations of a fastening element 110' and Figure 9 shows an exemplary schematic configuration of a fastening element 110". It is presently to be noted that the exemplary configurations of knurled section 138 described below can respectively be used for fastening elements 110' and 110", even if they are only described for one of the two elements.

As shown in Figures 4 to 9, knurled region 138 comprises at least a first partial region that surrounds the cylindrical fastening section 127 in a frustoconical manner. In other words, the part of knurled region 138 that runs along axial direction A is tilted by a tilt angle α relative to second friction surface 136 of the contact element and therefore assumes the shape of a jacket surface of a truncated cone. In particular, the outer surface of knurled region 138 tapers starting out from bearing section 126 along fastening section 127 in axial direction A at tilt angle α. This ensures that knurled section 138 displaces material of contact element 106 in radial direction R when contact assembly 100', 100" is fastened and thereby presses against inner surface 146 of receiving opening 104. Even if thickness h2 of receiving opening 104 is small and/or if busbar 102 comprises a plurality of thin sheet metal conductors, low-ohmic contact resistance can be created between contact element 106 and busbar 102 without an energy-intensive welding process being necessary.

To further improve this effect, for example, part of the knurling region can be provided on bearing surface 148 of bearing section 126, as shown in Figure 8. At least part of bearing surface 148 of the bearing section can be knurled, where the knurls can again assume the shape of ribs 142 described above. Alternatively, the knurls of bearing surface 148 can also be fan-shaped or rounded. The knurls on bearing surface 148 also have the effect that the material of contact element 106 is pressed against inner surface 146 of receiving opening 104 when contact assembly 100', 100" is mounted, so that the bearing surface between contact element 106 and inner surface 146 of receiving opening 104 is increased. In addition, the knurling of bearing surface 148 has the advantage that the development of a torque between fastening element 110 and contact element 106 is suppressed so that twisting of fastening element 110 in relation to contact element 106 can be prevented. In other words, by knurling the bearing surface, the loosening torque for the fastening element in relation to the contact element (and therefore also in relation to the busbar with which the contact element is connected in a positive-fit manner) is increased.

In order to further improve the electrical contact between contact element 106 and busbar 102, part of first friction surface 120 can optionally also be knurled. The knurls can again assume the shape of ribs 142 described above and can in particular protrude radially from first friction surface 120, run parallel to one another in axial direction A, and be distributed over the first friction surface in the circumferential direction. The knurling of the first friction surface can also help to break up an oxide layer that can form on inner surface 146 of receiving opening 104, in particular if busbar 102 is formed from aluminum or a plurality of aluminum thin sheet metal conductors (but also if busbar 102 or the thin sheet metal conductors that busbar 102 comprises are formed from copper or a copper alloy).

To simplify mutual insertion, contact element 106, busbar 102, and/or fastening element 110 can each optionally comprise insertion bevels.

As described above, at least two complementary contact assemblies 100' and 100" can be installed to form a connection assembly (not shown) for electrically connecting two busbars 102 each through contact elements 106 of two contact assemblies 100' and 100". In particular, screw-shaped holding element 132 is passed through non-threaded fastening element 110" and screwed to internal thread 128 of fastening element 110' in order to mechanically fasten contact elements 106 to one another and to respective busbar 102. The connection assembly can each comprise a touch guard housing for respective contact assembly 100', 100", where fastening elements 110', 110" can comprise touch guard caps 150', 150" (see Figure 1 to Figure 3) as part of the respective touch guard housing. Touch guard caps 150', 150" are not shown in Figures 4 to 6.

In order to mechanically fasten contact element 106 to busbar 102, collar section 114 of contact element 106 is first inserted into receiving opening 104 of busbar 102 along an insertion direction that runs parallel to axial direction A until contact element 106 is affixed in a frictionally engaged manner to busbar 102 at least on first friction surface 120 in receiving opening 104. Fastening element 110', 110" is then inserted into passage opening 108 of contact element 106. Fastening element 110', 110" is then fastened in contact assembly 100', 100" by screw-shaped holding device 132. In this case, either screw-shaped holding device 132 of a complementary mating contact assembly 100" is screwed to fastening element 110', or screw-shaped holding device 132 is passed through fastening device 110" and screwed to a fastening device 110' of a complementary mating contact assembly 100'. During this fastening step, a contact force FK is generated by knurled section 138 of fastening element 110', 110" which displaces the material of contact element 106 in axial direction A and in radial direction R and thereby presses first friction surface 120 of contact element 106 flatly against inner surface 146 of receiving opening 104 of busbar 102. In this way, the contact area between first friction surface 120 and inner side 146 of receiving opening 104 of busbar 102 can be increased and contact resistance between busbar 102 and contact element 106 can be reduced.

This is particularly advantageous if busbar 102 (or more precisely receiving opening 104 of busbar 102) has a small thickness, in particular less than 6 mm, in particular less than 2.5 mm, and/or if busbar 102 comprises a plurality of pieces of thin-layer sheet metal which can have a thickness in axial direction A in the range of less than 0.5 mm, preferably in the range of 0.01 mm to 0.1 mm, and which are layered on top of one another in axial direction A. Furthermore, the contacting method for contact assembly 100', 100" described is particularly advantageous if busbar 102 or the plurality of pieces of thin-layer sheet metal is made of an easily oxidizable material such as aluminum, copper or a copper and/or aluminum alloy.

The contacting method described is particularly suitable for the non-welding electrical contacting of a plurality of pieces of thin sheet metal conductors (or "thin-layer sheet metal") which have a thickness in axial direction A in the range of less than 0.5 mm, preferably in the range of 0.01 mm to 0.1 mm. Due to the fastening by way of contact assemblies 100' and 100", the thin sheet metal conductors can form a busbar 102 which is easily elastically deformable as a spring package.

### List of reference characters:

| **Reference character** | **Description** |
|---|---|
| 100, 100', 100" | contact assembly |
| 102 | bus bar |
| 104 | receiving opening |
| 106 | contact element |
| 108 | passage opening |
| 110, 110', 110" | fastening element |
| 112 | contact section |
| 114 | collar section |
| 116 | inner diameter of receiving opening 104 |
| 118 | outer diameter of collar section 114 |
| 120 | first friction surface |
| 122 | contact surface |
| 124 | gap |
| 126 | bearing surface |
| 127 | fastening section |
| 128 | internal thread |
| 130 | mating thread |
| 132 | holding element |
| 134 | widening |
| 136 | second friction surface |
| 138 | knurled section |
| 140 | inner diameter of passage opening 108 |
| 142 | ribs |
| 144 | axis of symmetry of passage opening 108 |
| 146 | inner surface of receiving opening 104 |
| 148 | bearing surface of bearing section 126 |
| 150, 150', 150" | touch guard cap |
| A | axial direction |
| α | tilt angle |
| h1, h2, h3 | heights |
| R | radial direction |

## Claims

1. Electrically conductive contact assembly (100, 100', 100"), wherein said contact assembly (100, 100', 100") comprises a contact element (106), a busbar (102) and a fastening element (110, 110', 110") for mechanically fastening said contact element (106) to said busbar (102),
wherein said busbar (102) comprises a receiving opening (104) for receiving at least part of said contact element (106),
wherein said contact element (106) comprises a passage opening (108) for inserting said fastening element (110, 110', 110"), and a contact section (112) extending in a tubular manner along said passage opening (108) and having a cylindrical contact surface (122) pointing radially outwardly,
wherein said contact element (106) is configured to be affixable in a frictionally engaged manner to said busbar (102) at least on a first friction surface (120) in said receiving opening (104),
wherein said fastening element (110, 110', 110") comprises a knurled section (138) which, in the axial direction (A), is longer or of the same length as said receiving opening (104) of said busbar (102), and
where said knurled section (138) is configured such that said knurled section (138) in the assembled state of said contact assembly (100, 100', 100") exerts a contact force (FK) upon said contact element (106) which presses said first friction surface (120) of said contact element (106) flatly against the inner side of said receiving opening (104) of said busbar (102).

2. Electrically conductive contact assembly (100, 100', 100") according to claim 1, wherein said contact force (FK) which said knurled section (138) exerts upon said contact element (106) has a radial component and an axial component with respect to an axis of symmetry (144) of said passage opening (108).

3. Electrically conductive contact assembly (100, 100', 100") according to one of the claims 1 or 2, wherein said fastening element (110, 110', 110") comprises a cylindrical fastening section (127) which is insertable into said passage opening (108) of said contact element (106), and wherein at least part of said knurled section (138) surrounds said cylindrical fastening section (127) in a frustoconical manner.

4. Electrically conductive contact assembly (100, 100', 100") according to claim 3, wherein the outer surface of said knurled section (138) tapers in the axial direction (A).

5. Electrically conductive contact assembly (100, 100', 100") according to one of the claims 1 to 4, wherein said fastening element (110, 110', 110") comprises a bearing section (126) that extends radially outwardly and comprises a bearing surface (148) for said busbar (102).

6. Electrically conductive contact assembly (100, 100', 100") according to claim 5, wherein said bearing surface (148) for said busbar (102) forms at least part of said knurled section (138).

7. Electrically conductive contact assembly (100, 100', 100") according to one of the claims 1 to 6, wherein said knurled section (138) comprises a plurality of triangular and/or rectangular toothing elements (142) which run parallel to one another at least in the axial direction (A).

8. Electrically conductive contact assembly (100, 100', 100") according to one of the claims 1 to 7, wherein said busbar (102) comprises a plurality of thin sheet metal conductors that are disposed on top of one another in the axial direction, wherein a layer thickness of each of the plurality of thin sheet metal conductors is preferably less than 0.5 mm; and/or
wherein said receiving opening (104) of said busbar (102) has a thickness (h2) of less than or equal to 6 mm in the axial direction (A).

9. Electrically conductive contact assembly (100, 100', 100") according to one of the claims 1 to 8, wherein at least part of said first friction surface (120) of said contact element (106) is knurled.

10. Electrically conductive contact assembly (100, 100') according to one of the claims 1 to 9, wherein said fastening element (110, 110') is configured as a threaded sleeve with an internal thread (128) for being screwing to a screw-shaped holding element (132).

11. Electrically conductive contact assembly (100, 100') according to one of the claims 1 to 9, wherein said fastening element (110, 110') is configured as a non-threaded collar sleeve for receiving a screw-shaped holding element (132).

12. Module connector with at least one contact assembly (100, 100', 100") according to one of the claims 1 to 11 and a touch guard housing (150, 150', 150"), wherein said touch guard housing (150, 150', 150") is configured to receive said at least one contact assembly (100, 100', 100").

13. Connection assembly with two contact assemblies (100, 100', 100") according to one of the claims 1 to 11, wherein said respective two contact assemblies (100, 100', 100") are configured to be complementary to one another.

14. Method for mechanically fastening a contact element (106) to a busbar (102), the method comprising:
inserting said contact element (106) into a receiving opening (104) of said busbar (102), wherein said contact element (106) is affixed in a frictionally engaged manner to said busbar (102) at least at a first friction surface (120) in said receiving opening (104), and wherein said contact element (106) comprises a contact section (112) extending in a tubular manner along a passage opening (108) of said contact element (106) and having a cylindrical contact surface (122) pointing radially outwardly;
inserting said fastening element (110, 110', 110") into said passage opening (108) of said contact element (106), wherein said fastening element (110, 110', 110") comprises a knurled section (138) which is, in the axial direction (A), longer or of the same length as said receiving opening (104) of said busbar (102); and
fastening said fastening element (110, 110', 110") in said passage opening (108) of said contact element (106) by way of a screw-shaped holding element, wherein said knurled section (138) exerts a contact force (FK) upon the contact element (106) which presses said first friction surface (120) of said contact element (106) flatly against the inner side of said receiving opening (104) of said busbar (102).

15. Method according to claim 14, wherein said busbar (102) comprises a plurality of non-welded thin sheet metal conductors which are disposed on top of one another in the axial direction (A).
